Europäisches Patentamt

(19) European Patent Office

Office européen des brevets

(11) Numéro de publication : **0 315 501 B1**

(12) **FASCICULE DE BREVET EUROPEEN**

(45) Date de publication du fascicule du brevet :
24.04.91 Bulletin 91/17

(51) Int. Cl.[5] : **F16B 31/02, F16B 43/00**

(21) Numéro de dépôt : 88402575.0

(22) Date de dépôt : 12.10.88

(54) **Rondelle déformable, permettant notamment de prédéterminer la force minimale de serrage d'un écrou ou d'une vis.**

(30) Priorité : 03.11.87 FR 8715235

(43) Date de publication de la demande :
10.05.89 Bulletin 89/19

(45) Mention de la délivrance du brevet :
24.04.91 Bulletin 91/17

(84) Etats contractants désignés :
AT BE CH DE ES GB GR IT LI LU NL SE

(56) Documents cités :
FR-A- 1 040 829
US-A- 3 306 154
US-A- 3 948 141
SOVIET INVENTIONS ILLUSTRATED, SECTION MECANIQUE

(73) Titulaire : Etablissements CAILLAU
28, rue Ernest Renan
F-92130 Issy-les-Moulineaux (FR)

(72) Inventeur : Calmettes, Lionel
84, Faubourg d'Orléans
F-41200 Romorantin (FR)

(74) Mandataire : Descourtieux, Philippe et al
CABINET BEAU de LOMENIE 55 rue
d'Amsterdam
F-75008 Paris (FR)

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue Saint-Denis, 75001 PARIS

## Description

Il est important, notamment dans les fabrications en grandes séries, par exemple dans la construction automobile, d'effectuer le serrage des écrous sur les vis ou des vis dans des trous taraudés avec une force de serrage suffisante. Or, dans ce genre de fabrication, on utilise fréquemment des visseuses motorisées et le couple développé par ce genre de machines dépend de leur réglage ; ce couple peut varier assez rapidement au cours de l'emploi, entraînant des variations quelquefois importantes de la force de serrage de la vis ou de l'écrou, et, par conséquent, des pièces à assembler. Si l'opérateur n'effectue pas en temps utile la vérification du serrage, par exemple au moyen d'une clé dynamométrique, il existe un risque que certains assemblages soient insuffisamment serrés.

On a déjà proposé par les US-A-3.306.154 et US-A-3.948.141 des rondelles déformables permettant de vérifier, au moins approximativement, la force de serrage de deux pièces. Cependant la déformation de la rondelle n'est pas entièrement visible après le serrage de sorte qu'il est impossible d'affirmer avec une certitude absolue que la force de serrage est au moins égale à une valeur prédéterminée.

La présente invention a pour objet une rondelle déformable, permettant de prédéterminer une force de serrage minimale d'une vis ou d'un écrou. La déformation prévue de la rondelle n'intervient en effet qu'après le dépassement d'une force prédéterminée par la structure de la rondelle, de sorte que, si la déformation n'est pas visible, on peut en déduire avec certitude que la force minimale n'a pas été atteinte.

Une rondelle est constituée, comme il est connu, par une pièce massive, généralement métallique et en forme de disque plan, de faible épaisseur par rapport aux dimensions de sa périphérie et présente un perçage central correspondant sensiblement au diamètre de la vis sur laquelle elle doit être montée.

Selon l'invention, la rondelle présente sur l'une de ses faces un lamage circulaire, concentrique au perçage central, dont le diamètre extérieur est notablement supérieur à celui du perçage central. La rondelle comporte, d'autre part, sur sa tranche, dans la région non lamée, une gorge visible, dont le fond cylindrique est également coaxial au perçage central. Ce fond cylindrique présente un diamètre au plus égal au diamètre extérieur du lamage circulaire.

L'invention sera mieux comprise et diverses caractéristiques secondaires ainsi que ses avantages apparaîtront au cours de la description qui va suivre, en référence au dessin annexé, dans lequel :

La figure 1 est une vue en coupe d'une rondelle déformable selon l'invention, avant et après serrage.

La figure 2 est une vue en coupe partielle avec arrachement d'un écrou équipé d'une rondelle selon la figure 1 et constituant avec elle une pièce unique.

La figure 3 est une vue en plan de l'écrou représenté sur la figure 2.

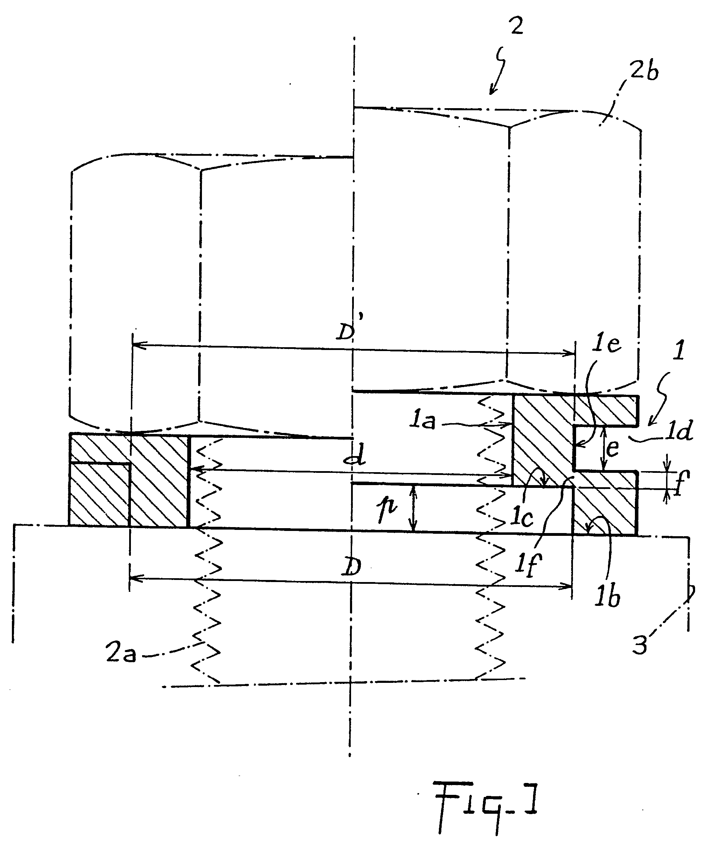

Si l'on se reporte à la figure 1, on voit une rondelle désignée par la référence générale 1 constituée, ainsi qu'on le sait, par une pièce plate, par exemple un disque, présentant un perçage central 1a dont le diamètre $d$ est suffisant pour permettre le passage de la tige filetée 2a d'une vis 2 (représentée en trait ponctué) dont la tête 2b peut prendre appui sur la rondelle. La rondelle 1 prend elle-même appui sur une pièce à serrer représentée schématiquement en trait ponctué et désignée par la référence 3.

Sur sa face inférieure 1b, c'est-à-dire sur celle qui est en contact avec la pièce à serrer 3, la rondelle 1 présente un lamage circulaire 1c coaxial au perçage 1a. Le diamètre D du lamage est bien évidemment supérieur au diamètre $d$ du perçage 1a et, de préférence, notablement supérieur à celui-ci. Par exemple, dans le cas d'une rondelle circulaire, dont la coupe axiale serait celle qui est représentée sur la figure 1, le diamètre D du lamage sera avantageusement voisin du diamètre moyen de l'anneau que constitue la rondelle. Toutefois, on soulignera dès maintenant et on précisera encore plus loin que la forme de la périphérie extérieure de la rondelle 1 n'est pas imposée par l'invention, bien que la forme d'un disque annulaire soit la plus courante et, en général, la plus avantageuse.

La profondeur $p$ du lamage 1c n'est pas exactement déterminée par l'invention, mais elle sera de préférence voisine de la largeur de l'anneau lamé, c'est-à-dire de la moitié de la largeur de l'anneau constituant la rondelle elle-même.

Sur la tranche de la rondelle 1, dans la région non lamée, il est prévu une gorge 1d dont le fond 1e est cylindrique et coaxial au perçage central 1a ainsi qu'au lamage 1c. Le diamètre D'de ce fond cylindrique est au plus égal au diamètre D du lamage 1c et de préférence très voisin de ce diamètre D. D'autre part, l'épaisseur $e$ de la gorge 1d est elle-même aussi voisine que possible de la profondeur $p$ du lamage. La raison de ces dispositions apparaîtra plus loin.

Bien évidemment, ainsi qu'on le voit sur la figure 1, il subsiste une certaine épaisseur $f$ de matière entre la gorge 1d et le lamage 1c.

C'est cette épaisseur $f$ qui permet, comme on va le montrer, de prédéterminer une force de serrage minimale de la vis sur une pièce à serrer ou d'un écrou sur une vis.

En effet, lorsqu'on tourne la tête 2b de la vis 2, ce qui a pour effet d'écraser la rondelle 1 sur la pièce à serrer 3, la partie supérieure de la rondelle joue le rôle d'un poinçon de cisaillement par rapport à la partie inférieure. La force s'exerçant sur la zone annulaire 1f d'épaisseur $f$ provoquera le cisaillement de cette zone si le couple exercé sur la tête de la vis est suffisant.

Dans cette hypothèse, la partie supérieure de la rondelle peut venir coiffer à peu près exactement la partie inférieure (voir figure 1, partie gauche) puisque le fond cylindrique 1e a un diamètre au plus égal à celui du lamage et que l'épaisseur e de la gorge est pratiquement égale à la profondeur p du lamage.

Dans le cas, visé par la présente invention, où la vis 2 est entraînée par une visseuse motorisée, cette dernière poursuit son mouvement après le cisaillement de la zone 1f de la rondelle. En pratique, le couple de blocage de la visseuse ne peut se dérégler pendant cette dernière phase de l'opération de serrage qui s'effectue généralement sur moins d'un tour de l'arbre de la visseuse et l'on est donc certain, lorsque la rondelle a pris la position représentée sur la partie gauche de la figure 1, qu'elle est serrée avec une force au moins égale à celle nécessaire au cisaillement de la zone 1f.

A cet égard, on rappellera que la force F nécessaire au cisaillement de la zone 1g est donnée par la formule $F = \pi\, DfR$ où D est le diamètre moyen de la zone 1f et f son épaisseur, R étant la résistance du matériau constituant la rondelle. En ce qui concerne la gorge 1d son épaisseur e sera avantageusement comprise entre 0,5 mm et 2 mm, en fonction des dimensions de la rondelle.

Le lecteur a déjà compris l'intérêt de l'invention pour faciliter le contrôle des fabrications, plus particulièrement du serrage des assemblages de pièces par des vis et/ou des écrous. Si l'on examine en effet l'état de la rondelle, on voit immédiatement la gorge 1d lorsque l'assemblage n'est pas suffisamment serré. Il est alors possible de procéder à un nouveau serrage, en général une vérification au moyen d'une clé dynamométrique. Au contraire, si la gorge 1d a disparu, le contrôleur sait que le serrage est suffisant.

D'autre part, le lecteur a également compris que la rondelle selon l'invention peut être placée sous une tête de vis comme dans l'exemple représenté sur la figure 1 ou, au contraire, sous un écrou susceptible d'être monté sur une tige filetée. Il est également évident que le sens de montage de la rondelle est indifférent, le cisaillement de la zone 1f se produisant quelle que soit la face de la rondelle en appui sur la pièce à serrer.

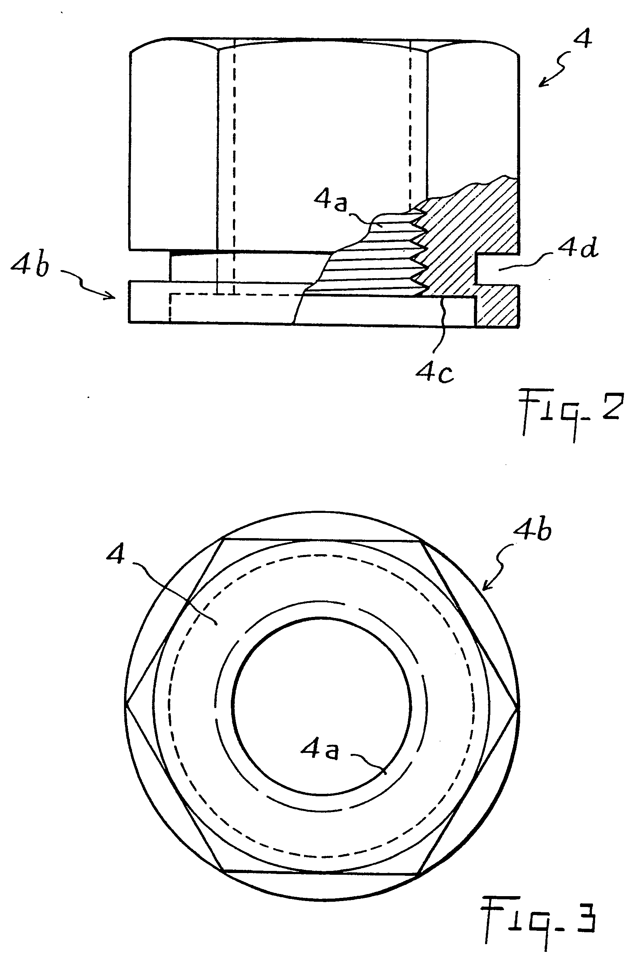

On soulignera maintenant que la rondelle selon l'invention peut être facilement incorporée à un écrou, pour ne constituer qu'une seule pièce avec lui. Cette variante de réalisation est représentée aux figures 2 et 3. Si l'on se reporte au dessin, on voit un écrou 4 massif à six pans dont le perçage central 4a est taraudé.

La base 4b de l'écrou présente un lamage 4c et une gorge 4d dont les caractéristiques ne seront pas à nouveau décrites car elles correspondent respectivement à celles du lamage 1c et de la gorge 1d décrites en référence à la figure 1.

On soulignera seulement que le taraudage de l'écrou se prolonge jusqu'au lamage 4c de la base 4b, laquelle peut être constituée par une collerette circulaire, comme on le voit sur les figures, ou au contraire, présenter une forme hexagonale correspondant à celle du corps de l'écrou 4.

L'utilisation de l'écrou 4 ainsi que ses avantages sont bien évidemment analogues à ceux qui ont été décrits plus haut, la gorge 4d de la base de l'écrou disparaissant après un serrage suffisant de l'écrou et cisaillement de la zone de raccordement des deux parties constituant la base 4b.

## Revendications

1. Rondelle déformable, permettant notamment de prédéterminer la force de serrage d'un écrou monté sur une vis ou d'une vis coopérant avec un trou taraudé, constituée par une pièce massive de faible épaisseur par rapport aux dimensions de sa périphérie présentant un perçage central correspondant sensiblement au diamètre de la vis sur laquelle elle doit être montée, caractérisée en ce qu'elle présente sur l'une de ses faces (1b) un lamage circulaire (1c) concentrique au perçage central (1a), dont le diamètre extérieur (D) est notablement supérieur à celui du perçage central et en ce qu'elle comporte sur sa tranche, dans la région non lamée, une gorge (1d) visible dont le fond cylindrique (1e) est également concentrique au perçage central (1a) et présente un diamètre (D') au plus égal au diamètre extérieur (D) du lamage circulaire.

2. Rondelle selon la revendication 1, caractérisée en ce que la profondeur (p) du lamage (1c) est sensiblement égale à la largeur de l'anneau lamé.

3. Rondelle selon l'une quelconque des revendications 1 et 2, caractérisée en ce que l'épaisseur (e) de la gorge (1d) est sensiblement égale à la profondeur (p) du lamage (1c).

4. Ecrou équipé d'une rondelle selon la revendication 1, caractérisé en ce que l'écrou et sa rondelle constituent une pièce unique (4), le perçage central (4a) de la rondelle étant taraudé et le lamage (4c) étant situé sur une face destinée à venir en appui sur l'une des pièces à serrer.

5. Ecrou selon la revendication 4, caractérisé en ce qu'il présente sur l'une de ses faces (4b) une collerette circulaire, dans laquelle sont pratiqués le lamage (4c) et la gorge (4d) de la rondelle.

## Ansprüche

1. Verformbare Unterlegscheibe, die insbesondere die Vorbestimmung der Festziehkraft einer auf einer Schraube montierten Mutter oder einer mit einem Gewindeloch zusammenwirkenden Schraube gestattet und aus einem massiven Stück von bezüglich der Dimensionen seines Umfangs geringer Dicke besteht, das eine zentrale Bohrung aufweist, die im wesentlichen dem Durchmesser der Schraube entspricht, auf der es zu montieren ist, dadurch gekennzeichnet, daß sie auf einer ihrer Flächen (1b) eine zur zentralen Bohrung (1a) konzentrische kreisförmige Senkung (1c) aufweist, deren Außendurchmesser (D) bedeutend größer als jener der zentralen Bohrung ist, und daß sie auf ihrem Mittelstück im senkenlosen Bereich eine sichtbare Nut (1d) aufweist, deren zylindrischer Grund (1e) ebenfalls konzentrisch zur zentralen Bohrung (1a) ist und einen Durchmesser (D') aufweist, der höchstens gleich dem Außendurchmesser (D) der kreisförmigen Senkung ist.

2. Unterlegscheibe nach Anspruch 1, dadurch gekennzeichnet, daß die Tiefe (p) der Senkung (lc) im wesentlichen gleich der Breite des Senkenringes ist.

3. Unterlegscheibe nach einem der Ansprüche 1 und 2, dadurch gekennzeichnet, daß die Dicke (e) der Nut (1d) im wesentlichen gleich der Tiefe (p) der Senkung (1c) ist.

4. Mit einer Unterlegscheibe nach Anspruch 1 ausgestattete Mutter, dadurch gekennzeichnet, daß die Mutter und ihre Unterlegscheibe ein einziges Stück (4) bilden, wobei die zentrale Bohrung (4a) der Unterlegscheibe mit Gewinde versehen ist und sich die Senkung (4c) auf einer Fläche befindet, die zum Inanlagekommen an einem der festzuziehenden Stücke bestimmt ist.

5. Mutter nach Anspruch 4, dadurch gekennzeichnet, daß sie auf einer ihrer Flächen (4b) einen kreisförmigen Bund aufweist, in dem die Senkung (4c) und die Nut (4d) der Unterlegscheibe eingearbeitet sind.

## Claims

1. Deformable washer permitting in particular to predetermine the tightening strength of a nut mounted on a screw or of a screw cooperating with a tapped hole, constituted by a solid piece of small thickness with respect to the dimensions of its periphery, which piece is provided with a central bore corresponding substantially to the diameter of the screw on which it is to be mounted, characterized in that it comprises on one of its faces (1b) a circular countersink (1c) concentric to the central bore (1a), of outer diameter (D) substantially greater than that of the central bore, and in that it comprises on its edge, in the area that is not countersunk, a visible groove (1d) of which the cylindrical base (1e) is also concentric to the central bore (1a), and has a diameter (D') at the most equal to the outer diameter (D) of the circular countersink.

2. Washer according to claim 1, characterized in that the depth (p) of the countersink (1c) is substantially equal to the width of the countersunk ring.

3. Washer according to any one of claims 1 and 2, characterized in that the thickness (e) of the groove (1d) is substantially equal to the depth (p) of the countersink.

4. Nut equipped with a washer according to claim 1, characterized in that the nut and its washer constitute a single piece (4), the central bore (4a) of the washer being tapped and the countersink (4c) being situated on one face designed to rest against one of the parts to be tightened.

5. Nut according to claim 4, characterized in that it is provided on one of its faces (4b) with a circular flange, in which are formed the countersink (4c) and the groove (4d) of the washer.

Fig. 1

Fig. 2

Fig. 3